Europäisches Patentamt

European Patent Office

Office européen des brevets

(11) Veröffentlichungsnummer: **0 235 609**
**B1**

(12) EUROPÄISCHE PATENTSCHRIFT

(45) Veröffentlichungstag der Patentschrift:
02.05.90

(51) Int. Cl.⁴: **F02B 33/42, F04F 11/02**

(21) Anmeldenummer: **87101608.5**

(22) Anmeldetag: **06.02.87**

(54) **Durch die Gaskräfte angetriebener, freilaufender Druckwellenlader.**

(30) Priorität: **28.02.86 CH 826/86**

(43) Veröffentlichungstag der Anmeldung:
**09.09.87 Patentblatt 87/37**

(45) Bekanntmachung des Hinweises auf die Patenterteilung:
**02.05.90 Patentblatt 90/18**

(84) Benannte Vertragsstaaten:
**AT CH DE ES FR GB IT LI NL**

(56) Entgegenhaltungen:
EP-A- 0 020 791
EP-A- 0 080 741
EP-A- 0 123 990
CH-A- 378 595
FR-A- 2 327 428
GB-A- 845 183
US-A- 3 206 107

(73) Patentinhaber: **BBC Brown Boveri AG, Haselstrasse, CH-5401 Baden(CH)**

(72) Erfinder: **El-Nashar, Ibrahim, Dr., Nägellmoosstrasse 5, CH-8302 Kloten(CH)**
Erfinder: **Kirchhofer, Hubert, Birchhofstrasse 6, CH-5412 Gebenstorf(CH)**
Erfinder: **Komauer, Christian, Boldirain 2, CH-5415 Rieden(CH)**
Erfinder: **Mayer, Andreas, Fohrhölzlistrasse 14b, CH-5443 Niederrohrdorf(CH)**
Erfinder: **Perevuznik, Josef, Ahornstrasse 17, CH-5442 Fislisbach(CH)**
Erfinder: **Spinnler, Fritz, Im Brüggli 9, CH-4422 Arisdorf(CH)**
Erfinder: **Jaussi, François, 320 Montmelley, CH-1631 Echarlens(CH)**

## Beschreibung

Die vorliegende Erfindung betrifft einen durch die Gaskräfte angetriebenen, freilaufenden Druckwellenlader nach dem Oberbegriff des Patentanspruchs 1.

Volle Freiheit in der Anordnung eines Druckwellenladers bei wirtschaftlich vertretbarem Aufwand bietet wie bei Abgasturboladern praktisch nur der Antrieb durch die Abgase. Ihre Zuleitung zum Abgasgehäuse des Druckwellenladers mit seinen Steuerkanten und -kanälen ist durch einen einfach zu gestaltenden Abgaskanal problemlos möglich und für die Umsetzung der Strömungsenergie der Abgase in die Drehbewegung des Rotors sind vielfältige Möglichkeiten denkbar, wie tangentiale Beaufschlagung der Rotorzellenwände oder speziell dafür vorgesehener Schaufelkränze in Verbindung mit gehäusefesten Elementen zur Umlenkung und gegebenenfalls örtlich verteilter Konzentration des Abgasstromes in das Rotorgehäuse oder in einen dafür vorhandenen Schhaufelkranz hinein zur Erzeugung einer tangentialen Komponente der Eintrittsgeschwindigkeit des Abgasstromes.

Es sind aber noch weitere Vorteile zu nennen. Die wegfallende Querbelastung der Lagerung gestattet die Verwendung kleinerer Lager, wodurch die Umfangsgeschwindigkeit der Wälzkörper und demnach bei gleicher Drehzahl die thermische Belastung gegenüber Druckwellenladern mit grösseren Lagern geringer wird. Die kleineren Lagerdurchmesser ermöglichen es, bei gleichen Aussenabmessungen des Laders den freien Zellenquerschnitt, d.h., den nutzbaren Strömungsquerschnitt des Rotors, zu vergrössern und den Lader daher für einen grösseren Motor zu verwenden. Vorteile ergeben sich auch bezüglich der kritischen Drehzahl, die in einem grösseren Abstand zum überwiegend gefahrenen Drehzahlbereich des Laders auftritt. Ebenso wird das Ansprechverhalten bei allen Beschleunigungsvorgängen besser, soweit die Füllungsgrenze des Rotors nicht überschritten wird. Bei tiefen Vollastdrehzahlen des Motors wird der abgasgetriebene Rotor auch schneller laufen als ein mit fester Uebersetzung vom Motor angetriebener. Dies verringert die sonst bei niedrigen Drehzahlen vorhandene Pulsation der Ladeluftlieferung und ermöglicht ein kleineres Receivervolumen, was wiederum die thermische Trägheit verringert und den Abgasreceiver verbilligt.

Aus dem Patentschrifttum sind Druckwellenmaschinen bekannt, deren Rotor durch ein zu expandierendes Gas unabhängig von einer Kraftmaschine angetrieben wird. Im Gegensatz zu den hauptsächlich als Auflademaschinen verwendeten Druckwandlern, welche die im Abgasstrom eines Motors enthaltene Energie zur Druckerhöhung eines gewichtlich etwa gleich grossen Ladeluftstromes umsetzen, wobei dessen Druck über jenem des Abgasstromes liegt, betreffen die genannten Patente Drucktauscher, bei denen die zu verdichtende Luft annähernd auf den Druck des expandierenden Mediums gebracht wird, also beispielsweise die Abgase eines Motors oder, bei der Verwendung eines Drucktauschers als Hochdruckstufe einer Gasturbine, in einer Brennkammer oder durch einen Wärmetauscher erhitzte Luft. Bei einem solchen Drucktauscher dient die Energie der Abgase bzw. der erhitzten Luft dazu, eine Menge kalter Luft zu verdichten, die grösser ist als die Menge der zu expandierenden Abgase bzw. der erhitzten Luft. Da bei einem Motor der Ladeluftstrom etwa gleich ist dem Abgasstrom, besteht dort für die überschüssige Luft im allgemeinen kein Bedarf, weshalb Drucktauscher für eine Aufladung kaum in Frage kommen, wohl aber, wie gesagt, als Hochdruckverdichter einer Gasturbine in Verbindung mit einem konventionellen Axial- oder Radialverdichter als Niederdruckverdichterteil, ausserdem auch für Kältemaschinen, Wärmepumpen, chemische Prozesse, druckgefeuerte Dampfkessel usw..

Ein solcher Drucktauscher ist aus der CH-PS 225 426 bekannt. Beim Rotor dieses Drucktauschers sind die Zellenwände gegenüber einer Axialschnittebene geneigt angeordnet, etwa in Form einer Schraubfläche, oder schaufelförmig gekrümmt. Der angestrebte eigentliche Zweck der solcherart gestalteten Zellenwände besteht in der Vermeidung oder Verringerung von Stossverlusten der beim Drucktauscherprozess beteiligten Gase am Eintritt in bzw. am Austritt aus den Rotorzellen, wobei die absolute Austrittsgeschwindigkeit gegenüber dem Rotor eine Umfangskomponente erhält, so dass die absolute Austrittsgeschwindigkeit verkleinert wird, wogegen der Eintritt des Gases mit Stoss erfolgen kann, der den Rotor antreibt.

Ein weiterer Drucktauscher ist in der CH-PS 550 937 beschrieben, der als Hochdruckverdichter zwischen einem Niederdruckaxialverdichter und einer Gasturbine angeordnet und dessen Rotor entweder mit der Turbinenwelle gekuppelt oder unabhängig von der Gasturbine mit eigenem Antrieb versehen sein kann. Von einem Selbstantrieb ist in dieser Patentschrift keine Rede. Sie beschreibt vielmehr, wie durch eine spezielle Auslegung der Zellen des Rotors der Druckunterschied zwischen dem expandierenden heissen Gas und dem zu verdichtenden kalten Gas in der Niederdruckzone erhöht werden kann, ohne gleichzeitig den entsprechenden Druckunterschied auf der Hochdruckseite zu vergrössern, um den Verdichter zu entlasten und damit Nutzleistung und Wirkungsgrad der Anlage zu steigern.

Einen Drucktauscher mit Selbstantrieb durch das drucküberträgende Medium ist hingegen in der GB-PS 921 686 beschrieben. Dabei sind die Zellenwände einlasseitig über etwa ein Drittel ihrer Länge gekrümmt, im übrigen Teil aber achsparallel, und die zugehörigen Einlasskanäle sind gegen die Rotorstirnseite so geneigt, dass sie tangential in den gekrümmten Abschnitt der Rotorzellen einmünden. Die den Rotor antreibende Kraft entsteht durch Ablenken des einströmenden Mediums am gekrümmten Teil der Zellenwände des Rotors.

Bei den vorerwähnten Druckwellenmaschinen handelt es sich um Drucktauscher, die, wie gesagt, für eine Aufladung von Verbrennungsmotoren kaum in Frage kommen. Dies ist den als Druckwandler arbeitenden Druckwellenladern vorbehalten, bei denen die Verwirklichung des Antriebs durch die Motorabgase eine Reihe von Massnahmen erfordert, die über die Gestaltung der Zellenwände des Rotors zum Ab- oder Umlenken des Abgasstromes hinausgehen,

Ein derartiger Druckwellenlader der eingangs genannten Art ist in der EP-A 0 205 843 - welche einen Stand der Technik nach Art. 54(3) EPUe darstellt - mit allen jenen Mitteln gezeigt und beschrieben, welche die Grundvoraussetzung für einen freilaufenden Lader bilden. Zu einem praktisch brauchbaren Druckwellenlader mit Selbstantrieb gehört u.a. eine Startventileinrichtung, mit der ein einwandfreies Starten des Motors und Anfahren aus dem Stillstand unter Last im kalten Zustand sowie ein Wiederanlassen des warmen Motors und unverzügliches Wegfahren unter Last möglich ist. Sie hat dafür zu sorgen, dass der Rotor den für ein genügend starkes Anfahrdrehmoment und den für jeweilige Teillast erforderlichen Ladeluftstrom liefert. Anfahrschwierigkeiten des Druckwellenladers bei kaltem Motor sind bedingt durch das noch steife Fett in den Wälzlagern und/oder durch Verschmutzung des Rotors und damit erhöhte Reibung zwischen dem Gehäuse und den Stirnflächen des Rotors. Ein solches Startventil hat im Zusammenwirken mit anderen Elementen auch für einen einwandfreien Tiefleerlauf zu sorgen, da ansonsten die Rotordrehzahl so tief liegen würde, dass die im Abgasstrom enthaltenen Partikeln auf die Luftseite übertreten könnten. Für die Steuerung des Ladeluftstromes über den ganzen Lastbereich sind auf die Charakteristik des freilaufenden Druckwandlers abgestimmte Einrichtungen wie Drosselklappen, Wastegate u. dergl. vorzusehen.

Prinzipbedingt kann der Abgasstrom durch die immer vorhandene Drallströmung ohne weitere Massnahmen zum Antrieb eines Rotors mit achsparallelen Zellenwänden benutzt werden. Diese »natürliche« Drallströmung ist jedoch nicht imstande, den Rotor entsprechend den jeweiligen Lastzuständen genügend schnell und auf genügend hohe Drehzahlen zu beschleunigen.

Die aus der EP-A 0 205 843 bekannten Mittel allein genügen den an einen gegenständlichen Druckwellenlader gestellten Anforderungen jedoch nicht. Sie sind daher diesen Anforderungen anzupassen und wirksamer zu gestalten und durch Elemente zum Konzentrieren des Abgasstromes zu unterstützen. Da die zum Rotorantrieb erforderliche Energie des Abgasstromes natürlich für die an die Luft zu übertragende Verdichtungsarbeit fehlt, muss im Interesse eines guten Verdichtungswirkungsgrades die durch unterschiedliche Erwärmungen und Materialausdehnungszahlen von Rotor und Gehäuse bedingte Vergrösserung der Leckspalten zwischen den Stirnflächen des Rotors und dem Gas- bzw. Luftgehäuse bei instationären Betriebszuständen, wie beispielsweise beim Starten und Beschleunigen, möglichst gleichbleibend klein gehalten werden.

Mit der vorliegenden, im Patentanspruch 1 definierten Erfindung wird die Aufgabe gelöst, einen abgasgetriebenen, als Druckwandler arbeitenden Druckwellenlader zu schaffen, der die vorstehend umrissenen Anforderungen erfüllt und die beschriebenen Nachteile des mit konstanter Uebersetzung vom Motor angetriebenen Druckwellenladers vermeidet.

Im folgenden wird die Erfindung unter Bezugnahme auf in der Zeichnung dargestellte Diagramme und Ausführungsbeispiele von für einen praktisch brauchbaren freilaufenden Druckwellenlader erforderlichen Einrichtungen näher erläutert.

In der Zeichnung stellen dar: Die

Fig. 1 - 5 verschiedene Varianten mit Düsen im Luft- oder Gasgehäuse, die in der Anfahrphase von der Ladeluft gespeist werden, mit Einrichtungen zur Steuerung der Ladeluftklappe, die

Fig. 6 - 8 Einrichtungen am Gasgehäuse zur Konzentration des Hochdruckabgases auf einzelne Zyklen und/oder Fluten des Druckwellenladers in der Anfahrphase, die

Fig. 9 eine Ausführung mit einer Düse im Steg vor den Kompressionstaschen des Luftgehäuses zum Antrieb des Rotors bei Lastbetrieb, die

Fig. 10 eine spezielle Ausführung des Hochdruckabgaskanals mit gegenüber der Normalausführung verstärktem Antriebsgasstrahl zum Lastbetrieb, die

Fig. 11 ebenfalls eine Ausführung mit verstärktem Antriebsgasstrahl und spezieller Ausbildung der Expansionstaschen zum Lastbetrieb, und die

Fig. 12 eine spezielle Ausbildung des Niederdruckluftkanals zur Verstärkung des Antriebsluftstrahles.

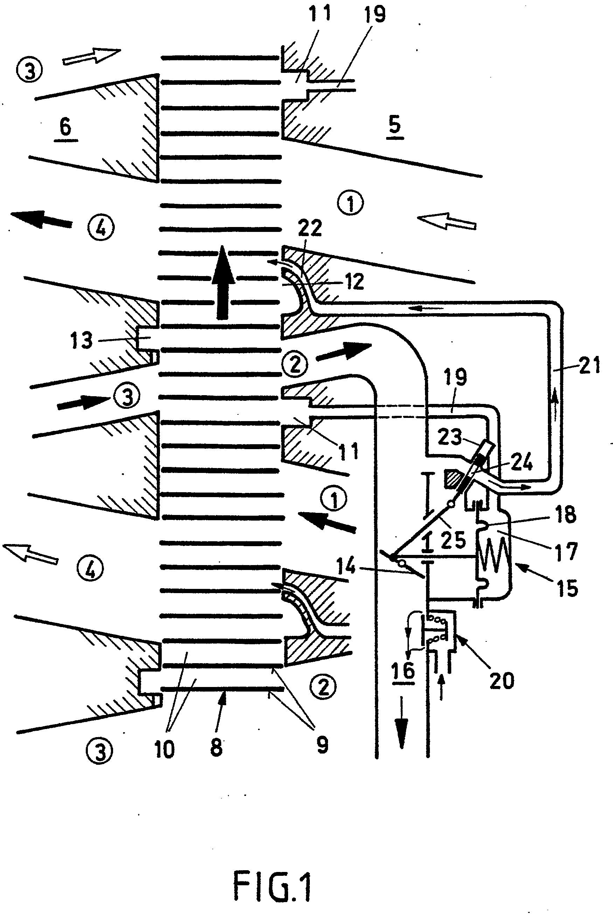

Die Fig. 1 zeigt von einem ersten Ausführungsbeispiel schematisch den für das Verständnis der Erfindung wesentlichen Teil eines freilaufenden Druckwellenladers, nämlich einen in die Ebene abgewickelten Zylinderschnitt durch den Rotor und das Gas- und das Luftgehäuse in halber Höhe der Rotorzellen. Von einem der beiden vorhandenen Zyklen in den Gehäusen ist einer mit allen seinen Elementen dargestellt, während vom zweiten Zyklus nur die an den ersten angrenzenden Kanäle gezeigt sind. Unter einem "Zyklus" ist hier, wie bei Druckwellenmaschinen üblich, die Gesamtheit der Gas- und Luftkanäle, der Expansions-, Kompressionstaschen und sonstigen Hilfskanäle zu verstehen, die für das Funktionieren eines Druckwellenprozesses erforderlich sind. Die zwei Zyklen sind um 180° gegeneinander versetzt im Luftgehäuse 5 bzw. Gasgehäuse 6 angeordnet. Ihre Hauptkanäle 1 bis 4 münden an ebenen Stirnseiten des Luft- und des Gasgehäuses 5 bzw. 6 in das Innere eines Rotorgehäuses 7, das einen im Luftgehäuse 5 auf bekannte Weise fliegend gelagerten Zellenrotor 8 mit Zellenwänden 9 umschliesst, welche Rotorzellen 10 begrenzen. Die Hauptkanäle sind ein Niederdruckluftkanal 1, durch den Luft von Umgebungsdruck in die Rotorzellen 10 angesaugt und der daher im folgenden kurz Ansaugluftkanal genannt wird, ein Hochdruckluftkanal 2, der im folgenden kürzer als Ladeluftkanal bezeichnet wird, ein Hochdruckabgaskanal 3, durch den die vom Motor ausgestossenen Verbrennungsgase in die Rotorzellen 10 geleitet werden, wo sie die angesaugte Luft auf den Ladeluftdruck verdichten, sowie ein Niederdruckabgaskanal 4, im folgenden kurz Auspuffkanal genannt, über den die in den Rotorzellen 10 entspannten Abgase ins Freie abgeleitet werden. Die zu einem Zyklus gehörenden Strömungspfeile in den Kanälen 1 bis 4 sind voll schwarz, die zum zweiten Zyklus gehörenden im Umriss gezeichnet.

Zu einem Zyklus gehören auch Hilfskanäle im Luft- und im Gasgehäuse, die dazu dienen, in bekannter Weise über den ganzen Betriebsbereich eines Motors, d.h., auch ausserhalb des praktisch wichtigsten Betriebsbereiches, für den die Kanäle 1 bis 4 bzw. deren Oeffnungs- und Schliesskanten optimal ausgelegt sind, einen funktionierenden Druckwellenprozess zu erhalten. Diese Hilfskanäle sind im vorliegenden Falle im Luftgehäuse 5 eine Kompressionstasche 11 zwischen dem Ansaugluftkanal 1 und dem Ladeluftkanal 2 unmittelbar vor diesem, in Rotordrehrichtung gesehen, eine Expansionstasche 12 zwischen dem Ladeluftkanal 2 und dem Ansaugluftkanal 1 des folgenden Zyklus sowie im Gasgehäuse 6 eine Gastasche 13 unmittelbar nach dem Hochdruckabgaskanal 3, ebenfalls in Rotordrehrichtung gesehen, die durch den dicken schwarzen Pfeil in der Rotorzellenabwicklung symbolisiert wird.

Für den praktischen Betrieb eines Druckwellenladers für Fahrzeugmotoren ist ferner eine mittig schwenkbar gelagerte Ladeluftklappe 14 in der Ladeluftleitung 16 vorgesehen, die den Ladeluftkanal 2 des Luftgehäuses 5 mit den Lufteinlasskanälen des nicht dargestellten Motors verbindet. Zur Betätigung der Ladeluftklappe 14 dient beispielsweise eine in der CH-Patentanmeldung Nr. 2714/85-1 näher beschriebene Steuerungseinrichtung 15, deren Stellmotor von einer Membrandose 17 gebildet wird, deren federbelastete Membran 18 einerseits vom Druck im Ladeluftkanal 2 und andererseits über eine Steuerdruckleitung 19 von dem in der Kompressionstasche 11 herrschenden Druck beaufschlagt wird. Solange letzterer überwiegt, versperrt die Ladeluftklappe 14 den Ladeluftkanal 2.

Es kommen für die Steuerung natürlich auch andere Prozessdrücke oder ein geeignetes, vom Druckwellenprozess oder vom Betriebszustand des Motors abhängiges oder gesteuertes Vakuum in Frage.

In dieser Phase mit abgesperrtem Ladeluftkanal 2 arbeitet der Motor als Saugmotor, indem er über ein schwach federbelastetes Schnüffelventil 20 Luft direkt aus der Umgebung ansaugt. Sobald der Rotor 8 des Laders auf höhere Touren gekommen ist und der Motor belastet wird, funktioniert auch der Druckwellenprozess, so dass bereits Luft komprimiert wird und folglich der Druck vor der Ladeluftklappe 14 steigt, gleichzeitig aber der Druck in der Kompressionstasche 11 abnimmt, so dass die Membran 18 die Klappe 14 in die Offenstellung schwenkt. Sobald der Druck im Ladeluftstrom den Umgebungsdruck überwiegt, bleibt das Schnüffelventil 20 geschlossen und der Motor erhält ausschliesslich verdichtete Luft aus dem Lader.

Zunächst werden im folgenden die Massnahmen zur Verstärkung des Anfahrdrehmoments in der Startphase beschrieben. Um den Rotoranlauf zu erreichen, muss in der Startphase die Ladeluftklappe 14 geschlossen, der Ladeluftkanal 2 vor der Klappe 14 aber durch irgendeine Oeffnung entlastet sein, da bei geschlossener Klappe 14 aus dem Ladeluftkanal 2 in den Rotor 7 rückströmende Luft die Wirkung des drehmomenterzeugenden Abgasstromes beeinträchtigen würde. Der Abgasstrom, der unter einem spitzen Winkel einströmt, gemessen zwischen den positiven Richtungen der Vektoren der Rotorumfangsgeschwindigkeit und der Eintrittsgeschwindigkeit des Hochdruckabgases, wirkt von den ersten Zündungen des Motors an treibend, würde aber durch die rückströmende Luft geschwächt werden. Der Entlastungsstrom der Ladeluft durch besagte Oeffnung wird an einer vorteilhaft gelegenen Stelle des Luftgehäuses 5 zum Antrieb des Rotors ausgenützt und damit wieder dem Druckwellenprozess zugeführt.

Für die vorliegende Aufgabe, den Rotor 8 aus dem Stillstand freilaufend ohne mechanische Kopplung mit dem Motor hochzufahren, kann die Steuerungseinrichtung 15 nach der obenerwähnten CH-Patentanmeldung 2714/85-1 mit einer Zusatzeinrichtung gekoppelt werden, bestehend aus einer Treibleitung 21, die den Raum vor der Ladeluftklappe 14 mit einer Stelle im Steg zwischen der Expansionstasche 12 und dem Ansaugluftkanal 1 verbindet und in diesem Steg in einer Düse 22 ausläuft, sowie mit einem Schieberventil 23 in dieser Treibleitung, dessen Schieber 24 durch eine Stange 25 mit der Klappe 14 verbunden ist. Die Düse 22 bildet hier die erwähnte Oeffnung zur Entlastung des Ladeluftkanals 2 beim Anfahren. Fig. 1 zeigt den Schieber 24 in einer Lage, in der er den Durchströmquerschnitt der Treibleitung 21 freigibt. Da der Druck bei stillstehendem oder sehr langsam drehendem Rotor im Ladeluftkanal 2 höher ist als an der Mündung der Düse 22, strömt aus dem Ladeluftkanal ein Teil der vor der Klappe 14 gestauten Luft, die in dieser Phase noch mit Abgas aus dem Hochdruckabgaskanal 3 verunreinigt ist, über die Treibleitung 21 zur Düse 22, die einen konzentrierten Treibstrahl gegen die Zellenwände des Rotors lenkt und dessen Drehzahl hochbeschleunigt, bis der Druck im Ladeluftkanal die zum Oeffnen der Ladeluftklappe 14 ausreichende Stärke erreicht hat. Die dadurch ausgelöste Schwenkbewegung der Ladeluftklappe 14 in deren offene Stellung bewirkt über die Stange 25 eine Schliessbewegung des Schiebers 24, der dadurch den Treibluftstrom zur Düse 22 absperrt. Die Rotordrehzahl wird sodann anschliessend überwiegend durch die Umfangskomponenten des unter einem spitzen Winkel in den Rotorraum einströmenden Hochdruckabgases aufrechterhalten und den Laständerungen entsprechend erhöht oder verringert. In geringerem Masse trägt auch die Umfangskomponente der ebenfalls unter einem spitzen Winkel aus dem Kanal 1 in den Rotorraum einströmenden Ansaugluft bei.

Die Anordnung der Düse für den Treibstrahl im Steg zwischen der Expansionstasche 12 und dem Ansaugluftkanal 1 hat den Vorteil, dass das dort eingeblasene Luft/Abgas-Gemisch auf kürzestem Wege in den Niederdruckabgaskanal 4 gelangt und nicht in den Ansaugluftkanal 1 zurückströmt. Der Treibstrahl unterstützt dadurch die Spülung des Abgases aus den Rotorzellen hinaus in den Niederdruckabgaskanal 4.

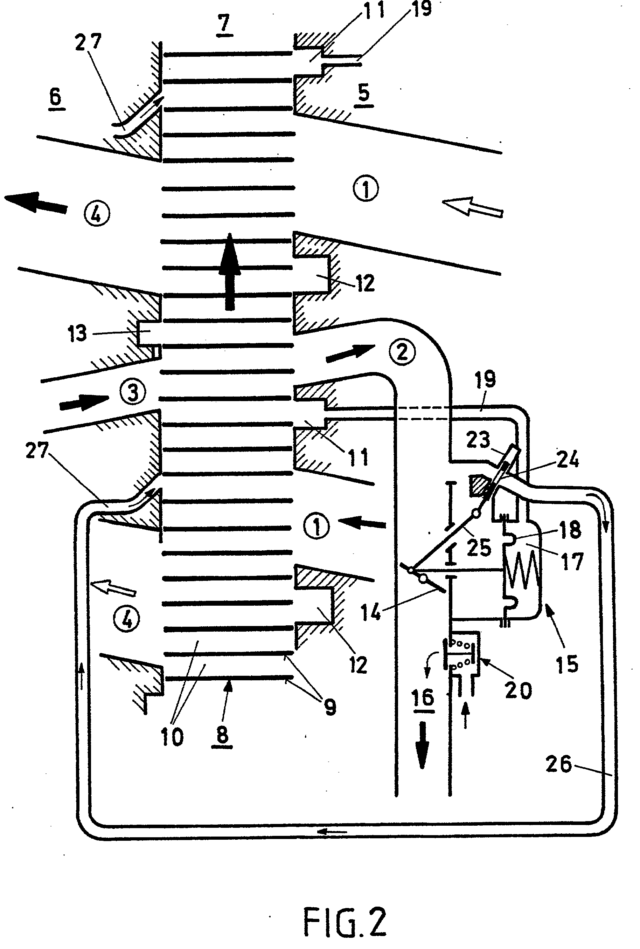

Die auf dem gleichen Prinzip basierende Ausführung nach Fig. 2 unterscheidet sich von der vorbeschriebenen dadurch, dass die Treibleitung 26 aus dem Gasgehäuse 6 im Steg zwischen dem Niederdruckabgaskanal 4 und dem Hochdruckabgaskanal 3 in den Rotorraum ausmündet. Die schlitzförmige Düse 27, die sich über die ganze Zellenhöhe erstreckt, ist dabei im Steg zwischen dem Hochdruckabgaskanal 3 und dem Niederdruckabgaskanal 4 an einer Stelle vorgesehen, an der über die beaufschlagte Zelle hinweg eine Druckentlastung zum Ansaugluftkanal 1 hin erfolgen kann, da sonst in der betreffenden Zelle ein Rückstau auftreten könnte. Die Düse kann im Mündungsbereich zylindrisch oder konisch ausgeführt sein, was wie für die Düse 22 nach Fig. 1 auch für alle übrigen Düsen dieser Art gilt. Bezüglich der Wirkungsweise der Steuerungseinrichtung 15 besteht gegenüber der erstgenannten Ausführung kein Unterschied.

Nach dem Oeffnen der Ladeluftklappe 14 bleibt das Schnüffelventil 20 durch den Ueberdruck der Ladeluft gegenüber dem Umgebungsluftdruck geschlossen, der Motor erhält seine Verbrennungsluft ausschliesslich über den Druckwellenlader.

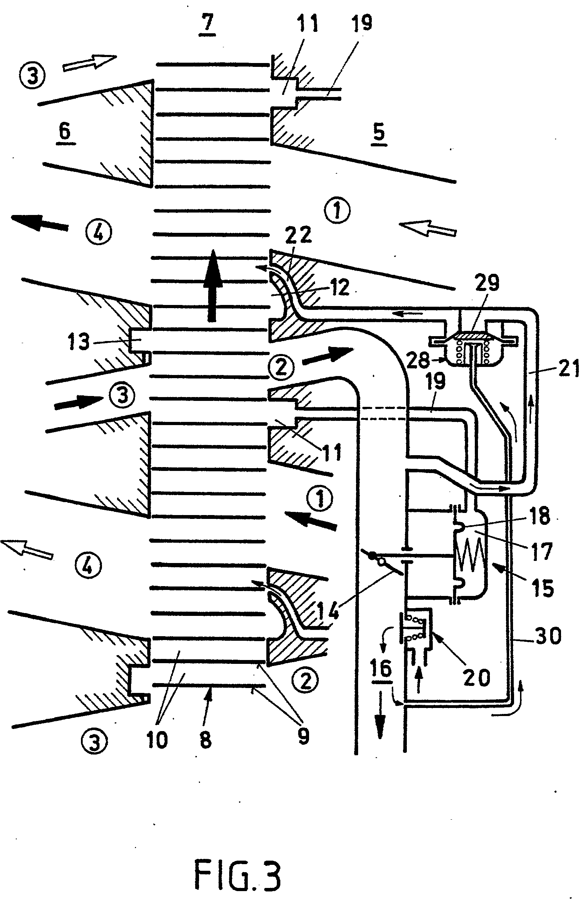

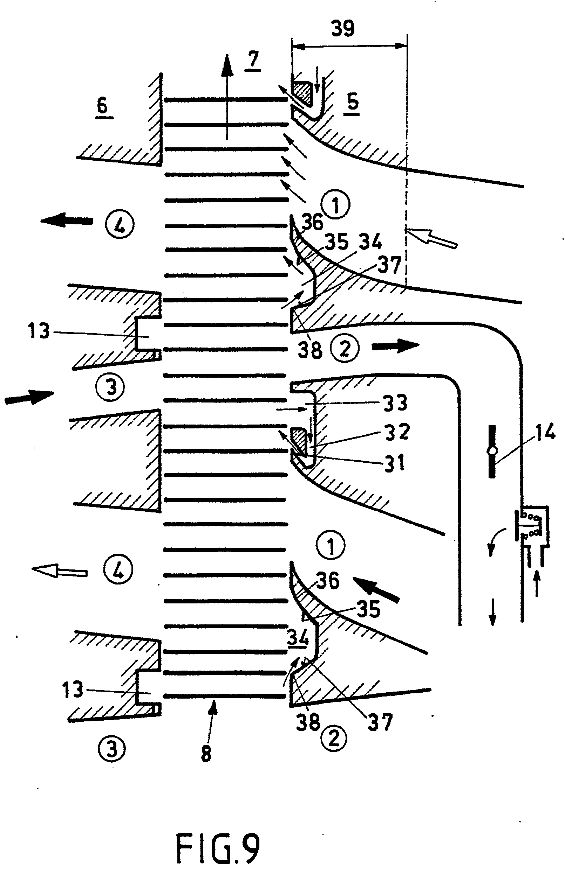

Eine Abart der erstgenannten Bauart zeigt die Fig. 3. Sie unterscheidet sich von dieser durch die Steuerung des Zuflusses des Treibmediums aus dem Ladeluftkanal 2 zur Düse 22 im Steg zwischen der Expansionstasche 12 und dem Ansaugluftkanal 1. Dazu ist anstelle eines mit der Ladeluftklappenbetätigung gekoppelten Schiebers 23 in der Treibleitung 21 ein federbelastetes Membranventil 28 vorgesehen. Die Oberseite der Membran 29 ist im Betrieb durch den Druck aus dem Ladeluftkanal 2, seine Unterseite über eine Steuerdruckleitung 30 durch den Druck aus der Ladeluftleitung 16 beaufschlagbar. Solange die Ladeluftklappe 14 geschlossen ist, überwiegt der Druck im Ladeluftkanal 2, der über die Leitung 21 auf die Membran 29 wirkt, diese von ihrem Dichtsitz abhebt und damit den Weg zur Düse 22 freigibt. Sobald die Klappe 14 bei genügend starkem Ladeluftstrom geöffnet ist, sind die Drücke beidseits der Membran 29 gleich und der Zufluss der Düse 22 daher abgesperrt, so dass der Antrieb allein durch das Hochdruckabgas erfolgt.

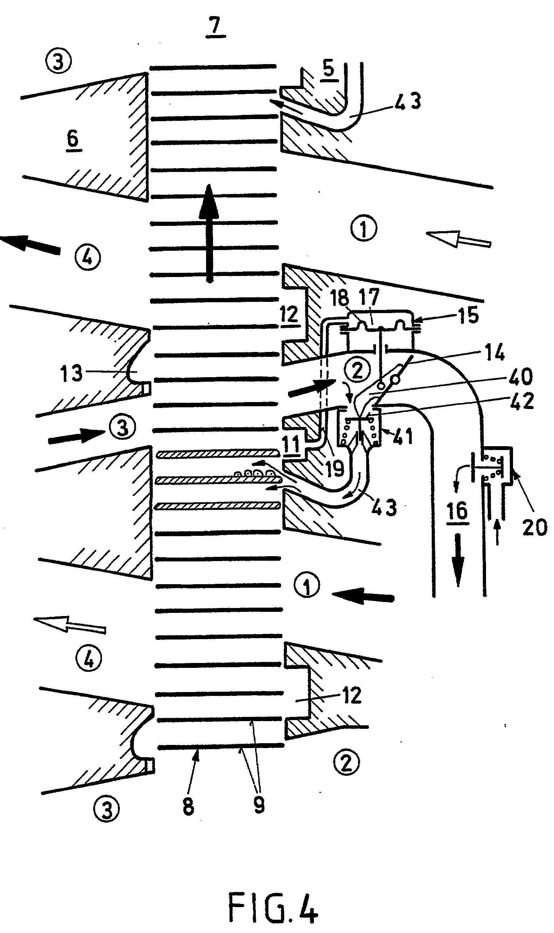

Die Fig. 4 zeigt eine weitere Möglichkeit, wie die Verdichterluft aus dem Ladeluftkanal 2 zum Hochdrehen des Rotors in der Anlaufphase benützt werden kann. Die zur Steuerung der Ladeluftklappe 14 dienende Einrichtung 15 entspricht im wesentlichen jener nach Fig. 1, wobei jedoch die Klappe 14 auf ihrem Rücken eine hakenförmige Nase 40 aufweist, deren Spitze bei geschlossener Klappe 14 ein Schliessorgan in Form einer federbelasteten Platte 42 eines stromaufwärts der Klappe 14 angeordneten Plattenventils 41 aufdrückt, wodurch die vor der Klappe 14 gestaute Luft über eine an das Ventil 41 anschliessende Treibleitung 43, die vor der Kompressionstasche 11 in das Rotorgehäuse 7 mündet, gegen die Zellenwände 9 geblasen wird. So lange der über die Steuerdruckleitung 19 auf die Oberseite der Membran 18 wirkende Druck in der Kompressionstasche 11 den Ladeluftdruck vor der Klappe 14 überwiegt, bleibt das Ventil 41 offen. Die Verbrennungsluft wird währenddessen über das Schnüffelventil 20 angesaugt. Nach Erreichen einer gewissen Rotordrehzahl, bei der sich ein für den Laderbetrieb des Motors genügend hoher Druck aufgebaut hat, überwiegt dieser den in der Kompressionstasche 11 herrschenden Druck und drückt die Membran 18 nach oben, die dadurch die Klappe 14 in die geöffnete Stellung schwenkt. Die Nase 40 gibt dabei gleichzeitig die Platte 42 frei, die damit den Ladeluftzufluss in die Treibleitung 43 absperrt.

Das Ventil 41 fungiert bei dieser Ausführung zusätzlich als Sicherheitsventil im Falle eines Versagens des Abblaseventils (Wastegate), durch das normalerweise überschüssige Ladeluft abgeleitet wird.

Bei allen bisher und im folgenden beschriebenen Ausführungen erstrecken sich die erwähnten Düsen zum Antrieb des Rotors gleich wie die in der Einleitung erwähnten Haupt- und Hilfskanäle im Luft- und Gasgehäuse über die ganze Höhe der Rotorzellen, bei mehrflutigen Rotoren entsprechend mit radialen Unterbrechungen über die Höhe der Zellen in den vorhandenen Fluten.

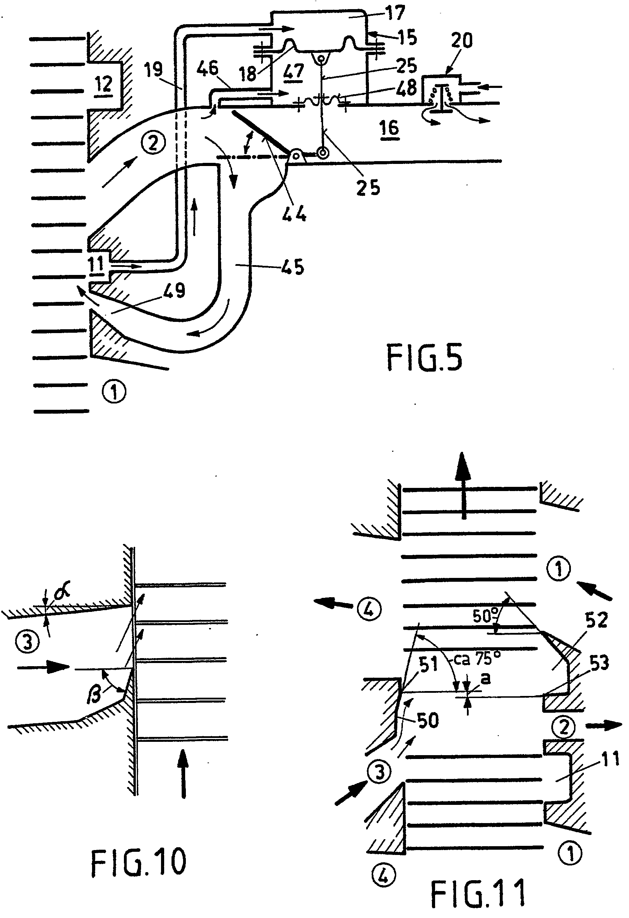

Die Fig. 5 zeigt eine Variante der vorstehend beschriebenen Ausführung, bei der eine Ladeluftklappe 44 in der Startphase die Ladeluftleitung 16 und bei Lastbetrieb den Zufluss aus dem Kanal 2 in eine Treibleitung 45 absperrt. Die Klappe 44 übernimmt hier also gleichzeitig auch die Funktion des Plattenventils 41 gemäss Fig. 4 mit Ausnahme der Funktion als Sicherheitsventil bei einem Versagen des Wastegates. Diese Stellung der Klappe im Lastbetrieb ist strichpunktiert eingezeichnet. Da sich wegen der einseitigen Anlenkung der Klappe 44 an der Wandung des Kanals 16 der von der Ladeluft beaufschlagte Raum 47 in der Membrandose unterhalb der Membran 18 stromabwärts der Klappe 44 befindet, zweigt aus dem Kanal 2 stromaufwärts vor dem oberen, freien Rand der Klappe 44 eine Belüftungsleitung 46 ab, die in den Raum 47 mündet. Gegenüber der Ladeluftleitung 16 ist der Raum 47 durch eine Gummimanschette 48, die auch die Stange 25 dichtend umschliesst, abgedichtet. Die Treibleitung 45 verengt sich vor der Einmündung in den Rotorraum zu einer Düse 49, um die Geschwindigkeit des Treibstrahls zu erhöhen.

Eine weitere Möglichkeit, das Antriebsmoment in der Anfahrphase abgasseitig zu erhöhen, besteht in einer Einschnürung des Abgasstromes. Bei einflutigen Druckwellenladern mit zwei Zyklen kann dies erreicht werden durch vorübergehende Absperrung des einen der beiden Zyklen, bei zweiflutigen Ladern durch Absperrung einer der beiden Fluten und erforderlichenfalls noch zusätzlich einer der beiden Zyklen der anderen Flut. Unter "Flut" ist hier ein selbständiger, funktionsfähiger Zellenring eines Rotors mit den zugehörigen Kanälen, Taschen usw. im Gas- bzw. Luftgehäuse zu verstehen. Bei einem zweiflutigen Druckwellenlader weist der Rotor zwei koaxiale Zellenringe auf einer Rotornabe auf, deren abgas- und luftseitige Kanäle und Taschen sich je in einem Gehäuse befinden.

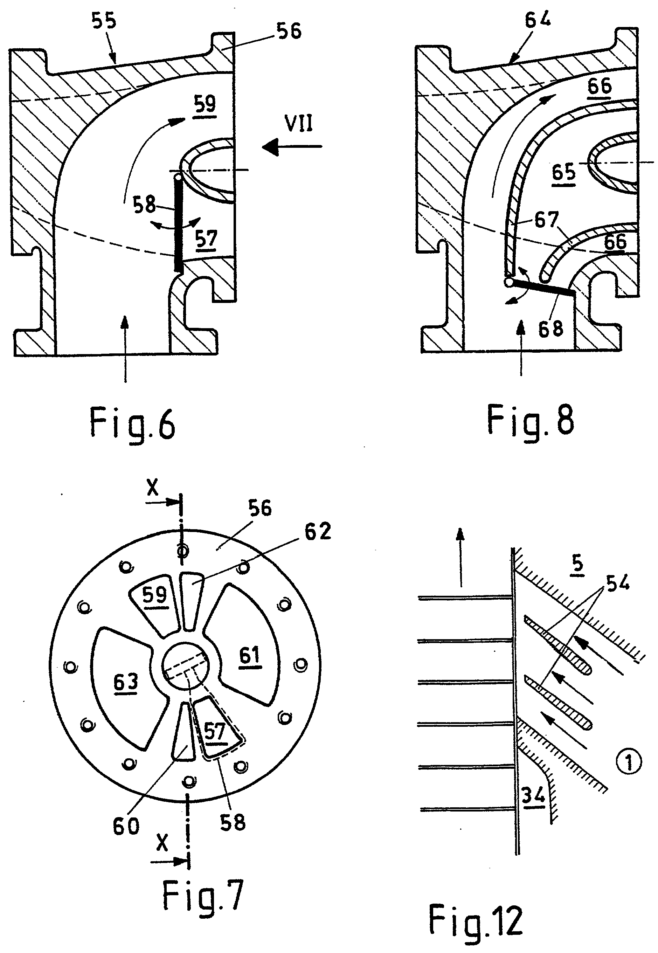

Die Fig. 6 und 7 zeigen im Schnitt schematisch das Gasgehäuse 55 eines einflutigen Laders mit zwei Zyklen bzw. eine Seitenansicht des Flansches 56 des Gehäuses 55 entsprechend der in der Fig. 6 eingezeichneten Projektionsrichtung VII. Im Hochdruckabgaskanal 57 des unteren Zyklus ist eine Absperrklappe 58 vorgesehen, die am zentralen Führungskörper angelenkt ist. In der gezeichneten, geschlossenen Stellung ist der Kanal 57 abgesperrt, so dass der gesamte Abgasstrom in den Hochdruckabgaskanal 59 des oberen Zyklus gelangt. Zum unteren Zyklus gehören noch die Gastasche 60 und der Auspuffkanal 61, zum oberen Zyklus analog die Gastasche 62 und der Auspuffkanal 63.

Die Fig. 8 zeigt einen Axialschnitt durch das Gasgehäuse 64 eines zweiflutigen Druckwellenladers. Die zwei Zuströmkanäle 65 bzw. 66 der beiden Fluten sind durch eine Trennwand 67 voneinander getrennt. Hier wird durch eine Absperrklappe 68 nicht nur der Zuströmkanal 65 der inneren Flut, sondern auch der untere Zyklus der äusseren Flut vom Abgasstrom abgeschnitten. Der obere Zyklus der äusseren Flut erhält demnach in der Anfahrphase den mehrfachen Abgasstrom gegenüber einer Ausführung ohne Fluten- und Zyklusabschaltung. Der Rotor wird somit mit der vierfachen Abgasgeschwindigkeit beaufschlagt und dementsprechend schneller auf eine Drehzahl gebracht, die den Motor zu einer Leistungsabgabe befähigt.

Bei allen dargestellten Varianten sorgen mit Luft gespeiste Düsen in der Anfahrphase im Zusammenwirken mit dem Hochdruckabgasstrahl und gegebenenfalls dem Ansaugluftstrahl für das Hochfahren des Rotors. Die zwei letzteren Massnahmen übernehmen dann nach dem Abschalten der Düsen den Antrieb des Druckwellenladers im Lastbetrieb des Motors.

In der Anfahrphase ist es wichtig, die Leckverluste durch das Spiel zwischen Rotor und Gehäusewänden so klein wie praktisch möglich zu halten, um die Medienströme für den Rotorantrieb maximal nutzen zu können. Auf diese Forderung ist die Werkstoffpaarung Rotor/Gehäusemantel abzustimmen. U.a. bietet sich dafür die Paarung eines Rotors aus Mineralkeramik mit einem Gehäusemantel aus Stahl an. In der Anfahrphase wird der Rotor schnell heiss, ändert aber seine Abmessungen wegen der kleinen Wärmedehnzahl der Mineralkeramik nur unwesentlich. Der Stahl des Gehäusemantels hat zwar eine viel höhere Wärmedehnzahl als Mineralkeramik, bleibt aber in der Anfahrphase kühler als der Rotor, so dass sich nur geringe Gehäusespiele bilden und die Leckverluste klein bleiben. Sobald der Gehäusemantel seine stationäre Betriebstemperatur angenommen hat, sind die Spiele natürlich erheblich grösser, relativ zum Massendurchsatz im Lastbetrieb bleiben die Leckverluste jedoch klein und können daher in Kauf genommen werden.

Die bisher beschriebenen Ausführungen gestatten für sich allein im wesentlichen nur das Anfahren des Rotors 8 aus dem Stillstand der Druckwellenmaschine bis zum Erreichen eines für den einwandfreien Motorlauf mit Leistungsabgabe genügenden Ladedrucks. Für den Antrieb des Druckwellenladers über den ganzen übrigen Lastbereich ist diese Einrichtung mit anderen Mitteln zu kombinieren. Die naheliegendste Massnahme hiezu ist der Antrieb durch das Hochdruckabgas, unterstützt von der Ansaugluft, wie bei Besprechung der Fig. 1 näher ausgeführt.

Eine dafür geeignete Einrichtung, die in der Startphase auch als Anfahrhilfe für den Rotor wirkt und bei der das Drehmoment bei tiefen Motordrehzahlen, insbesondere im Leerlaufbetrieb, selbstregelnd ist, zeigt die Fig. 9. Da für die Steuerung der Ladeluftklappe 14 die gleiche Einrichtung wie jene nach den Fig. 1-3 verwendet werden kann, ist sie nicht dargestellt, sondern nur die Ladeluftklappe 14 selbst schematisch eingezeichnet. Soweit die übrigen Elemente in Form und Funktion mit den analogen der früher beschriebenen Ausführungen übereinstimmen, sind sie mit den gleichen Bezugszahlen versehen.

Bei dieser Ausführung ist im Luftgehäuse 5 ebenfalls eine Düse 31 vorgesehen, die aber zwischen dem Ansaugluftkanal 1 und der Kompressionstasche 33 angeordnet ist. Diese Düse 31 wird über einen kurzen Ueberströmkanal 32 von der Kompressionstasche 33 gespeist, in der der Druck höher ist als stromaufwärts von ihr vor der Schliesskante des Kanals 1. Da dies für den ganzen Betriebsbereich gilt, wirkt diese Düse 31 auch über den ganzen Betriebsbereich treibend, insbesondere bei tiefen Motordrehzahlen sowie im unteren Leerlaufbereich, wo die Kompressionstasche 33 besonders wirksam ist, wozu nach der Anfahrphase die treibende Wirkung des Hochdruckabgases aus dem Kanal 3 und, in schwächerem Masse, der Ansaugluft aus dem Kanal 1 tritt.

Eine weitere Massnahme, die zum Antriebsmoment beiträgt, ist die Ausbildung einer Expansionstasche 34 mit einem schrägen Wandteil mindestens an der Seite ihrer Schliesskante 36, vorteilhaft aber auch mit einem schrägen Wandteil 37 an der Seite ihrer Oeffnungskante 38. In beiden Fällen tritt das Gas mit einer ausgeprägten Umfangskomponente in die Rotorzellen ein, bei zwei schrägen Wandteilen ist diese Umfangskomponente noch grösser, da das Gas nach der Oeffnungskante 38 bereits mit einer grösseren Umfangskomponente aus den ankommenden Zellen in die Tasche 34 eintritt.

Abweichend von der Form der in den Fig. 1-4 dargestellten Ansaugluftkanäle 1 münden diese bei der Ausführung nach Fig. 9 unter einem flacheren Winkel gegenüber der Umfangsrichtung des Rotors in den Rotorraum ein, so dass die Ansaugluft mit einer gegenüber den genannten Ausführungen grösseren Umfangskomponente eintritt und ein grösseres Antriebsmoment liefert. Die flachere Einmündung des Kanals 1 wird erhalten durch einen gekrümmten Mündungsabschnitt 39, dessen seitliche Wände man kurz vor der Mündung zweckmässig etwa parallel zum Wandteil 35 der Expansionstasche 34 und zur Düse 31 vor der Kompressionstasche 33 ausführen wird.

Die Fig. 10 zeigt, wie durch eine düsenartige Verengung des Hochdruckabgaskanals 3 vor seiner Einmündung in den Rotorraum der Treibstrahl in eine Richtung mit grösserer Umfangskomponente der Eintrittsgeschwindigkeit umgelenkt werden kann, um ein grosses Drehmoment im Lastbereich zu erhalten. Als günstige Werte der Winkel $\alpha$ und $\beta$ haben

sich 0-10° bzw ca. 75-80° erwiesen. Ein auf diese Weise gelenkter Treibstrahl erzeugt ein hohes Antriebsdrehmoment und ergibt demgemäss kurze Ansprechzeiten des Laders bei schnellen Lastzunahmen des Motors.

Noch besser wirkt diesbezüglich ein Keilgastaschenzuflusskanal 50 gemäss Fig. 11, der sich an der Einmündung des Kanals 3 von diesem aus, in der Rotordrehrichtung gesehen, bis über die gegenüberliegende Oeffnungskante 53 einer Expansionstasche 52 hinaus erstreckt. Mit anderen Worten, in Rotordrehrichtung gesehen liegt die Schliesskante 51 des Zuflusskanals 50 nach der Oeffnungskante 53 der Expansionstasche 52 mit einer schrägen Ausströmwand. Wenn von der Oeffnungskante 53 als Bezugspunkt ausgegangen und die Rotordrehrichtung als positiv angenommen wird, so kann der vorstehend beschriebene Sachverhalt so ausgedrückt werden, dass $\alpha > 0$ sein muss. Die Einhaltung dieser Bedingung gewährleistet, dass auch bei stillstehendem Rotor über die Expansionstasche 52 ein Antriebsmoment erzeugt wird. Ausserdem bietet sich die Möglichkeit, den Druckwellenlader im Stillstand durch die Motorabgase durchströmen zu lassen, um ihn, falls erforderlich, anzuwärmen oder zu enteisen. Die Einströmwand liegt bei dieser Expansionstasche 52 parallel zur Rotorachse, sie könnte aber auch, wie bei der Ausführung nach Fig. 9, schräg sein, was die treibende Wirkung der Tasche 52 verstärkt.

Beim Keilgastaschenzuflusskanal 50 hat sich für die Neigung der Ausströmwand ein Winkel von ca. 75° gegenüber der Richtung der Rotorachse als vorteilhaft erwiesen. Für die Ausströmwand der Expansionstasche 52 gelten entsprechend 50° als günstiger Wert für die Schräge.

Wie schon erwähnt, kann die aus dem Kanal 1 einströmende Ansaugluft, vor allem im tiefen Drehzahlbereich wegen ihrer grossen Menge und hohen Dichte, ebenfalls zum Antrieb des freilaufenden Rotors beitragen. Um nicht bremsend auf den Rotor zu wirken, muss ihre Geschwindigkeitskomponente in der Umfangsrichtung an jeder Stelle mindestens gleich der Umfangsgeschwindigkeit der Rotorzellenwände an der betreffenden Stelle sein. Für eine bestimmte Neigung der Kanalachse gehört zu jeder Rotordrehzahl ein bestimmter Luftdurchsatz, damit dies der Fall ist. Liegt der Luftdurchsatz darüber, so ist die Eintrittsgeschwindigkeit der Luft und somit ihre Umfangskomponente grösser als für stossfreien Eintritt erforderlich, sie wirkt daher treibend auf den Rotor.

Die Fig. 12 zeigt, wie die grosse Ansaugluftmenge im Kanal 1, die nach ihrem Eintritt in die Rotorzellen zunächst als Spülluft zum Ausschieben der entspannten Auspuffgase ins Freie dient, noch besser zum Antrieb nutzbar gemacht werden kann. Durch eine oder, wie dargestellt, zwei Führungsrippen 54 wird die Luft vor ihrem Eintritt in den Rotorraum beschleunigt, das Antriebsmoment wird verstärkt. Um eine Wirbelbildung infolge schräger Anströmung zu verhindern, sind die Vorderkanten der Führungsrippen gut gerundet. Durch die Kontraktion der Strömung im Mündungsbereich ist die Einhaltung des günstigen Anströmwinkels der Zellenwände auch besser gewährleistet als ohne Führungsrippen. Dabei kommt es insbesondere darauf an, dass ein Abreissen der Strömung in dem zur Oeffnungskante des Kanals 1 gehörigen Wandteil verhindert wird. Dies bedeutet, dass die der Oeffnungskante benachbarte Führungsrippe so nahe am erwähnten Wandteil angeordnet sein muss, dass das Ablösen der Strömung verhindert wird. Dies ist deshalb wichtig, weil an der Oeffnungskante die Hauptsaugwelle entsteht, die für eine gute Spülwirkung Voraussetzung ist. Gegenüber einer verwirbelten, ungerichteten Strömung in diesem Wandbereich ergibt sich dadurch eine erhöhte Spülluftmenge und daraus ein verbessertes Antriebsmoment.

## Patentansprüche

1. Freilaufender, durch den Abgasstrom eines Verbrennungsmotors angeriebener Druckwellenlader, mit einem Rotorgehäuse (7), einem Zellenrotor (8) innerhalb des Rotorgehäuses, der achsparallele oder schräg zur Rotorachse liegende oder schraubenförmig verwundene Zellenwände (9) aufweist, mit einem Luft- und einem Gasgehäuse (5 bzw. 6) an den beiden Stirnseiten des Rotorgehäuses (7), mit mindestens je einem Niederdruckluftkanal (1) und einem Hochdruckluftkanal (2) für die Zufuhr von Niederdruckluft bzw. Abfuhr von Hochdruckluft im Luftgehäuse (5) und mindestens je einem Hochdruckabgaskanal (3) und einem Niederdruckabgaskanal (4) für die Zufuhr von Hochdruckabgas bzw. Abfuhr von Niederdruckabgas im Gasgehäuse (6), ferner mit je einer den beiden Luftkanälen (1, 2) zugeordneten Kompressionstasche (11) und Expansionstasche (12) im Luftgehäuse (5) und mit je einer den beiden Abgaskanälen (3, 4) zugeordneten Gastasche (13) im Gasgehäuse (6), mit einer Lagerung zur Aufnahme der Rotorwelle im Luftgehäuse (5), mit Mitteln zur Beaufschlagung der Zellenwände (9) des Zellenrotors (8) zwecks Erzeugung eines in der Rotordrehrichtung wirkenden Impulses auf die Zellenwände (9), welche Mittel den Hochdruckabgaskanal (3) und den Niederdruckluftkanal (1) umfassen, die hierzu unter einem spitzen Winkel (< 90°), bezogen auf den Vektor der Rotorumfangsgeschwindigkeit, in das Rotorgehäuse (7) einmünden, ferner mit einer Ladeluftklappe (14) und einem Schnüffelventil (20) in der Ladeluftleitung (16), wobei die Ladeluftklappe (14; 14+40; 44) mit einer Steuerungseinrichtung (15) in Wirkverbindung steht, die durch ein vom Druckwellenprozess abgeleitetes Signal aktivierbar ist, sowie mit einer Werkstoffpaarung für den Zellenrotor (8) und das Rotorgehäuse (7), die geeignet ist, zwischen den Stirnseiten des Zellenrotors (8) und dem Luftgehäuse (5) bzw. dem Gasgehäuse (6) in der Anlaufphase des Druckwellenladers ein kleinstmögliches Laufspiel aufrechtzuerhalten, um insbesondere in der Anlaufphase die Leckverluste der Abgase und der Luft geringstmöglich zu halten, dadurch gekennzeichnet, dass die Mittel zur Beaufschlagung der Zellenwände (9) des Zellenrotors (8) außerdem Kanäle (22; 27; 43; 49) umfassen, die entweder im Luft- oder Gasgehäuse (5 bzw. 6) oder in beiden vorgesehen sind und in das Rotorgehäuse (7) einmünden, dass die geometrischen Achsen der genannten Kanäle (22; 27; 43; 49) im Bereich ihrer Einmündung in das Rotorgehäuse (7) mit dem Umfangsgeschwindigkeitsvektor des Rotors (8) an dieser Stelle einen spitzen Winkel (α < 90°) einschliessen, dass diese Kanäle (22; 27; 43; 49) jeweils mit einer Stelle des Luft- und/oder Gasgehäuses (5 bzw. 6) verbunden sind, an der bezüglich der Einmündung dieser Kanäle (22; 27; 43; 49) in das Rotorgehäuse (7) ein Ueberdruck herrscht, und dass die für die Ladeluftklappe (14) vorgesehene Steuerungseinrichtung (15) in der Startphase des Motors die Ladeluftklappe (14) geschlossen hält und zugleich den Hochdruckluftkanal (2) entlastet, derart, dass die aus dem Hochdruckluftkanal (2) entweichenden Gase den genannten Kanälen (22; 27; 43; 49) zugeleitet werden.

2. Druckwellenlader nach Anspruch 1, dadurch gekennzeichnet, dass für jeden Zyklus ein Kanal vorgesehen ist, der im Luftgehäuse (5) im Steg zwischen der Expansionstasche (12) und dem Niederdruckluftkanal (1) einmündet und dort zu einer Düse (22) verengt ist, und dass dieser Kanal über eine Treibleitung (21) mit einer stromaufwärts der Ladeluftklappe (14) gelegenen Stelle des Hochdruckluftkanals (2) in Verbindung steht.

3. Druckwellenlader nach Anspruch 1, dadurch gekennzeichnet, dass für jeden Zyklus ein Kanal vorgesehen ist, der in einer Düse (27) endet, die im Gasgehäuse (6) im Steg zwischen dem Niederdruckabgaskanal (4) und dem Hochdruckabgaskanal (3) in das Rotorgehäuse (7) einmündet und über eine Treibleitung (26) mit einer stromaufwärts der Ladeluftklappe (14) gelegenen Stelle der Hochdruckluftleitung (2) in Verbindung steht.

4. Druckwellenlader nach Anspruch 1, dadurch gekennzeichnet, dass für jeden Zyklus ein Kanal (32) vorgesehen ist, der in einer Düse (31) endet, die unmittelbar vor der Oeffnungskante einer Kompressionstasche (33) des Luftgehäuses (5) in das Rotorgehäuse (7) einmündet und über den Kanal (32) mit der Kompressionstasche (33) in Verbindung steht.

5. Druckwellenlader nach Anspruch 1, dadurch gekennzeichnet, dass für jeden Zyklus eine Düse (49) vorgesehen ist, die vor der Oeffnungskante der Kompressionstaschen (11) in das Rotorgehäuse (7) einmündet und über eine Treibleitung (43; 45) mit einer stromaufwärts einer Ladeluftklappe (14+40; 44) gelegenen Stelle der Hochdruckluftleitung (2) in Verbindung steht.

6. Druckwellenlader nach einem der Ansprüche 2 bis 5, dadurch gekennzeichnet, dass der Hochdruckabgaskanal (3) im Bereich seiner Einmündung in das Rotorgehäuse (7) als Düse ausgebildet ist, wobei der öffnungskantenseitige Wandteil des Kanals (3) unter einem Winkel β zwischen 75° und 80° und der schliesskantenseitige Wandteil unter einem Winkel α zwischen 0° und 10° geneigt ist, beide Winkel gegenüber einer Senkrechten zu den Stirnseiten des Rotors (8) gemessen.

7. Druckwellenlader nach einem der Ansprüche 2 bis 5, dadurch gekennzeichnet, dass der Hochdruckabgaskanal (3) sich im Bereich seiner Einmündung in das Rotorgehäuse (7) in einen sich stromabwärts erstreckenden Keilgastaschenzuflusskanal (50) erweitert, dessen schliesskantenseitiger Wandteil unter einem Winkel von vorzugsweise ca. 75°, gemessen bezüglich einer Senkrechten zu den Stirnseiten des Rotors (8), geneigt ist, und dass die Schliesskante (51) des Keilgastaschenzuflusskanals (50), in der Rotordrehrichtung gesehen, nach der Oeffnungskante (53) einer Expansionstasche (52) im Luftgehäuse (5) liegt.

8. Druckwellenlader nach Anspruch 1, dadurch gekennzeichnet, dass die Expansionstasche (34 bzw. 52) entweder sowohl an der Oeffnungskante (38) als auch an der Schliesskante (36) schräge Wandteile (37 bzw. 35) oder nur einen der Schliesskante benachbarten schrägen Wandteil aufweist, wobei der Winkel des der Schliesskante benachbarten schrägen Wandteiles in beiden Fällen vorzugsweise ca. 50° beträgt, gemessen gegenüber einer Senkrechten zur Stirnseite des Rotors (8).

9. Druckwellenlader nach einem der Ansprüche 2, 3 und 5, dadurch gekennzeichnet, dass die an sich bekannte Steuerungseinrichtung (15) als Hauptteile eine Membrandose (17) mit einer Membran (18), eine mit der Kompressionstasche (11) in Verbindung stehende Steuerdruckleitung (19) und eine Ventileinrichtung (23; 28; 41) für die Treibleitung (21; 26; 43) aufweist, wobei die Membran (18) einerseits vom Druck in der Steuerdruckleitung (19) und andererseits vom Druck in der Hochdruckluftleitung (2) beaufschlagt wird, dass die Ladeluftklappe (14; 14+40) mit der Membran (18) und der Ventileinrichtung (23; 28; 41) in Wirkverbindung steht, derart, dass bei geschlossener Ladeluftklappe (14; 14+40) die Ventileinrichtung (23; 28; 41) den Durchfluss durch die Treibleitung (21; 26; 43) freigibt und bei geöffneter Ladeluftklappe (14; 14+40) der Durchfluss durch die Treibleitung (21; 26; 43) abgesperrt ist.

10. Druckwellenlader nach Anspruch 9, dadurch gekennzeichnet, dass zur Wirkverbindung zwischen der Ladeluftklappe (14) und der Ventileinrichtung (41) eine an der Ladeluftklappe (14) angebrachte hakenförmige Nase (40) vorgesehen ist, deren Spitze mit einer Platte (42) in formschlüssiger Verbindung steht, welche Platte (42) das Schliesselement der Ventileinrichtung (41) bildet.

11. Druckwellenlader nach Anspruch 9, dadurch gekennzeichnet, dass die Ventileinrichtung in der Treibleitung (21) ein Membranventil (28) ist, dessen Membran (29) das Schliesselement bildet, das einerseits über die Treibleitung (21) vom Druck vor der geschlossenen Ladeluftklappe (14) und andererseits über eine Steuerdruckleitung (30), die stromabwärts der Ladeluftklappe (14) mit der Ladeluftleitung (16) in Verbindung steht, vom Druck nach der geschlossenen Ladeluftklappe beaufschlagt wird.

12. Druckwellenlader nach Anspruch 5, dadurch gekennzeichnet, dass die Ladeluftklappe (44) unmittelbar hinter der Abzweigung der Treibleitung (45) aus der Hochdruckluftleitung (2) so gelagert ist, dass sie bei vollständig freigegebenem Durchflussquerschnitt der Hochdruckluftleitung (2) den Eintrittsquerschnitt der genannten Abzweigung vollständig verschliesst, und dass zur Steuerung der Ladeluftklappe eine Membrandose (15) und eine mit der Kompressionstasche (11) in Verbindung stehende Steuerdruckleitung (19) vorgesehen ist.

13. Druckwellenlader nach Anspruch 1, mit einem einflutigen Rotor (8), dadurch gekennzeichnet, dass im Hochdruckabgaskanal (3) des einen (57) der beiden Zyklen (57, 59) eine Absperrklappe (58) vorgesehen ist, die in der Anfahrphase des Druckwellenladers von einer druckwellenprozesstypischen Druckdifferenz geschlossen gehalten wird.

14. Druckwellenlader nach Anspruch 1, mit einem Rotor mit zwei Fluten, dadurch gekennzeichnet, dass im Hochdruckabgaskanal im Zuströmkanal (65) zur inneren Flut eine Absperrklappe vorgesehen ist, die in der Anfahrphase des Druckwellenladers von einer druckwellenprozesstypischen Druckdifferenz geschlossen gehalten wird.

15. Druckwellenlader nach Anspruch 1, mit einem Rotor mit zwei Fluten, dadurch gekennzeichnet, dass im Hochdruckabgaskanal eine Absperrklappe (68) vorgesehen ist, die in der Anfahrphase des Druckwellenladers, von einer druckwellenprozesstypischen Druckdifferenz betätigt, den Zuströmkanal (65) zur inneren Flut und den Zuströmkanal (66) zum unteren Zyklus der äusseren Flut geschlossen hält.

16. Druckwellenlader nach Anspruch 1, dadurch gekennzeichnet, dass im Mündungsbereich des Niederdruckluftkanals (1) mindestens eine Führungsrippe (54) vorgesehen ist, von denen die der Oeffnungskante des Kanals (1) benachbarte Führungsrippe (54) derart angeordnet ist, dass sie ein Ablösen der Strömung im Bereich der Oeffnungskante verhindert.

**Claims**

1. Free-running pressurewave supercharger driven by the exhaust-gas flow of an internal combustion engine, having a rotor casing (7), a cell rotor (8) within the rotor casing which cell rotor has cell walls (9) parallel to the axis or oblique to the axis of the rotor or helically twisted, having an air casing (5) and a gas casing (6) on the two end surfaces of the rotor casing (7), having at least one low-pressure air port (1) each and one high-pressure air port (2) each for the supply of lowpressure air and the removal of high-pressure air in the air casing (5) and at least one high-pressure exhaust-gas port (3) each and one low-pressure exhaust-gas port (4) each for the supply of high-pressure exhaust-gas and removal of low-pressure exhaust-gas in the gas casing (6), also having a compression pocket (11) and an expansion pocket (12) in the air casing (5) associated one each with the two air ports (1, 2) and having a gas pocket (13) in the gas casing (6) associated one each with the two exhaust-gas ports (3, 4), having a bearing for accepting the rotor shaft in the air casing (5), having means for subjecting the cell walls (9) of the cell rotor (8) for the purpose of generating an impulse on the cell walls (9) acting in the direction of rotation of the rotor, which means comprise the high-pressure exhaust-gas port (3) and the low-pressure air port (1), which moreover enter the rotor casing (7) at an acute angle (<90°), referred to the vector of the rotor peripheral velocity, also having a supercharge air flap (14) and a snuffler valve (20) in the supercharge air line (16), the supercharge air flap (14; 14 + 40; 44) being effectively connected to a control device (15) which can be activated by a signal derived from the pressurewave process, and having a material pair for the cell rotor (8) and the rotor casing (7) which is suitable for maintaining an as small as possible clearance between the end surfaces of the cell rotor (8) and the air casing (5) and the gas casing (6) in the run-up phase of the pressurewave supercharger in order, particularly in the run-up phase, to keep the leakage losses of the exhaust gases and the air as small as possible, characterized in that the means for subjecting the cell walls (9) of the cell rotor (8) additionally comprise ports (22; 27; 43; 49) which are provided either in the air casing or the gas casing (5 or 6) or in both and enter into the rotor casing (7), in that the geometrical axes of the ports mentioned (22; 27; 43; 49) enclose an acute angle ($\alpha < 90°$) with the peripheral velocity vector of the rotor (8) in the region of their entry into the rotor casing (7), in that these ports (22; 27; 43; 49) are each connected with a position on the air casing and/or gas casing (5 or 6) at which a positive pressure is present relative to the entry of these ports (22; 27; 43; 49) in the rotor casing (7), and in that the control device (15) provided for the supercharged air flap (14) in the starting phase of the engine, holds the supercharged air flap (14) closed and, at the same time, relieves the high-pressure air port (2) in such a way that the gases escaping from the highpressure air port (2) are supplied to the ports mentioned (22; 27; 43; 49).

2. Pressurewave supercharger according to claim 1, characterized in that, for each cycle, a port is provided which enters the air casing (5) in the land between the expansion pocket (12) and the low-pressure air port (1) and is there contracted to form a nozzle (22), and in that this port is connected via a drive line (21) to a position in the high-pressure air port (2) located upstream of the supercharge air flap (14).

3. Pressurewave supercharger according to claim 1, characterized in that, for each cycle, a port is provided which ends in a nozzle (27) which enters the rotor casing (7) in the land between the low-pressure exhaust-gas port (4) and the high-pressure exhaust-gas port (3) in the gas casing (6) and is connected via a drive line (26) with a position in the high-pressure air line (2) located upstream of the supercharge air flap (14).

4. Pressurewave supercharger according to claim 1, characterized in that, for each cycle, a port (32) is provided which ends in a nozzle (31) which enters the rotor casing (7) immediately in front of the opening edge of a compression pocket (33) in the air casing (5) and is connected to the compression pocket (33) via the port (32).

5. Pressurewave supercharger according to claim 1, characterized in that, for each cycle, a nozzle (49) is provided which enters the rotor casing (7) before the opening edge of the compression pockets (11) and is connected via a drive line (43; 45) with a position in the high-pressure air line (2) located upstream of a supercharge air flap (14 + 40; 44).

6. Pressurewave supercharger according to one of claims 2 to 5, characterized in that the high-pressure exhaust-gas port (3) is designed as a nozzle in the region of its entry into the rotor casing (7), the opening edge side wall part of the port (3) being inclined at an angle β of between 75° and 80° and the closing edge side wall part being inclined at an angle α of between 0° and 10°, both angles being measured relative to a normal to the end surfaces of the rotor (8).

7. Pressurewave supercharger according to one of claims 2 to 5, characterized in that the high-pressure exhaust-gas port (3) expands into a wedge gas-pocket inlet flow port (50) extending downstream in the region of its entry into the rotor casing (7), the closing edge side wall part of which wedge gas-pocket inlet ports being inclined at an angle of preferably approximately 75°, measured relative to a normal to the end surfaces of the rotor (8), and in that the closing edge (51) of the wedge gas-pocket inlet port (50) is located, seen in the direction of rotation of the rotor, after the opening edge (53) of an expansion pocket (52) in the air casing (5).

8. Pressurewave supercharger according to claim 1, characterized in that the expansion pocket (34 or 52) has either oblique wall parts (37 and 35) on both the opening edge (38) and the closing edge (36) or only one oblique wall part adjacent to the closing edge, the angle of the oblique wall part adjacent to the closing edge being preferably about 50° in both cases, measured relative to a normal to the end surface of the rotor (8).

9. Pressurewave supercharger according to one of claims 2, 3 and 5, characterized in that the control device (15), known per se, has, as the main parts, a diaphragm capsule (17) with a diaphragm (18), a control pressure line (19) in connection with the compression pocket (11) and a valve device (23; 28; 41) for the drive line (21; 26; 43), the diaphragm (18) being subjected on one side to the pressure in the control pressure line (19) and, on the other side, to the pressure in the high-pressure air line (2), in that the supercharge air flap (14; 14 + 40) is in effective connection with the diaphragm (18) and the valve device (23; 28; 41) in such a way that when the supercharge air flap (14; 14 + 40) is closed, the valve device (23; 28; 41) releases the flow through the drive line (21; 26; 43) and, when the supercharge air flap (14; 14 + 40) is open, the flow through the drive line (21; 26; 43) is shut off.

10. Pressurewave supercharger according to claim 9, characterized in that a hook-shaped nose (40) attached to the supercharge air flap (14) is provided for effective connection between the supercharge air flap (14) and the valve device (41), the peak of which nose (40) is in positive connection with a plate (42) which forms the closing element of the valve device (41).

11. Pressurewave supercharger according to claim 9, characterized in that the valve device in the drive line (21) is a diaphragm valve (28) whose diaphragm (29) forms the closing element which is subjected on one side, via the drive line (21), to the pressure in front of the closed supercharge air flap (14) and, on the other side, is subjected to the pressure after the closed supercharge air flap via a control pressure line (30) which is connected to the supercharge air line (16) downstream of the supercharge air flap (14).

12. Pressurewave supercharger according to claim 5, characterized in that the supercharge air flap (44) is supported immediately behind the branch of the drive line (45) from the high-pressure air line (2) in such a way that it completely closes the entry cross-section of the branch mentioned when the flow cross-section of the high-pressure air line (2) is completely free and in that a diaphragm capsule (15) and a control pressure line (19) connected to the compression pocket (11) is (sic) provided for the control of the supercharge air flap.

13. Pressurewave supercharger according to claim 1, with a single-flute rotor (8), characterized in that a shut-off flap (58) is provided in the high-pressure exhaust-gas port (3) of one (57) of the two cycles (57, 59), which shut-off flap (58) is held closed in the run-up phase of the pressurewave supercharger by a pressure difference typical of the pressurewave process.

14. Pressurewave supercharger according to claim 1, having a rotor with two flutes, characterized in that a shut-off flap is provided in the high-pressure exhaust-gas port in the inlet port (65) to the inner flute, which shut-off flap is held closed in the run-up phase of the pressure-wave supercharger by a pressure difference typical of a pressure-wave process.

15. Pressurewave supercharger according to claim 1, having a rotor with two flutes, characterized in that a shut-off flap (68) is provided in the high-pressure exhaust-gas port, which shut-off flap (68) is actuated by a pressure difference typical of a pressurewave process during the run-up phase of the pressurewave super-charger and holds the inlet flow port (65) to the inner flute and the inner flow port (66) to the lower cycle of the outer flute closed.

16. Pressurewave supercharger according to claim 1, characterized in that at least one guide rib (54) is provided in the entry region of the low-pressure air port (1), of which guide ribs, the guide rib (54) adjacent to the opening edge of the port (1) is located in such a way that it prevents separation of the flow in the region of the opening edge.

**Revendications**

1.Turbochargeur à ondes de pression, à rotation libre, propulsé par le courant des gaz d'échappement d'un moteur à combustion, avec un corps de rotor (7), un rotor à cellules (8) placé à l'intérieur du corps de rotor, qui présente des parois de cellules (9) parallèles à l'axe ou obliques par rapport à l'axe du rotor ou torsadées en hélice, avec un corps à air et un corps à gaz (5, respectivement 6) aux deux faces terminales du corps de rotor (7), avec chacun, dans le corps à air (5), au moins un canal d'air basse pression (1) et un canal d'air haute pression (2) pour l'arrivée d'air basse pression respectivement pour l'expulsion d'air haute pression et chacun, dans le corps à gaz (6), au moins un canal de gaz d'échappement haute pression (3) et au moins un canal de gaz d'échappement basse pression (4) pour l'arrivée de gaz d'echappement haute pression respectivement pour l'expulsion de gaz d'échappement basse pression, avec en outre chacun une poche de compression (11) et une poche d'expansion (12) associées aux deux canaux d'air (1, 2) dans le corps à air (5) et avec chacun une poche à gaz (13) associée aux deux canaux de gaz d'échappement (3, 4) dans le corps à gaz (6), avec des paliers pour supporter l'arbre du rotor dans le corps à air (5), avec des moyens de projection sur les parois des cellules (9) du rotor à cellules (8) afin de produire une impulsion agissant sur les parois des cellules (9) dans le sens de rotation du rotor, lesquels moyens comprennent le canal de gaz d'échappement haute pression (3) et le canal d'air basse pression (1), qui à cet effet débouchent dans le corps du rotor (7) sous un angle aigu (<90°) par rapport au vecteur de la vitesse tangentielle du rotor, avec en plus un volet d'air de suralimentation (14) et une soupape d'admission d'air (20) dans la canalisation d'air de suralimentation (16), où le volet d'air de suralimentation (14, 14+40; 44) est en liaison active avec un dispositif de commande (15) qui peut être actionné par un signal dérivé du processus des ondes de pression, ainsi qu'avec un couple de matériaux pour le rotor à cellules (8) et le corps de rotor (7) qui est adapté pour maintenir un jeu aussi petit que possible, pendant la phase de démarrage du turbochargeur à ondes de pression, entre les faces d'extrémité du rotor à cellules (8) et le corps à air (5) respectivement le corps à gaz (6), afin de conserver aussi faibles que possible les pertes par fuites de gaz d'échappement et d'air pendat la phase de démarrage, caractérisé en ce que les moyens de projection sur les parois des cellules (9) du rotor à cellules (8) comprennent en outre des canaux (22; 27; 43; 49) qui sont prévus soit dans le corps à air soit dans le corps à gaz (5, respectivement 6) soit encore dans les deux et qui débouchent dans le corps de rotor (7), en ce que les axes géométriques desdits canaux (22; 27; 43; 49) forment, dans la région de leur embouchure dans le corps de rotor (7), un angle aigu (α <90°) avec le vecteur de la vitesse tangentielle du rotor (8) en ce point, en ce que ces canaux (22; 27; 43; 49) sont chacun reliés à un endroit du corps à air et/ou à gaz (5, respectivement 6) où règne une surpression par rapport à l'embouchure de ces canaux (22; 27; 43; 49) dans le corps de rotor (7), et en ce que le dispositif de commande (15) prévu pour le volet d'air de suralimentation (14) maintient fermé le volet d'air de suralimentation (14) pendant la phase de démarrage du moteur et déleste en même temps le canal d'air haute pression (2) de telle sorte que les gaz s'échappant du canal d'air haute pression (2) sont conduits auxdits canaux (22; 27; 43; 49).

2. Turbochargeur à ondes de pression suivant la revendication 1, caractérisé en ce qu'il est prévu pour chaque cycle un canal qui débouche dans le corps à air (5) dans la paroi entre la poche d'expansion (12) et le canal d'air basse pression (1) et qui s'y rétrécit en un injecteur (22), et en ce que ce canal est en communication par une canalisation d'injection (21) avec une région du canal d'air haute pression (2) située en amont du volet d'air de suralimentation (14).

3. Turbochargeur à ondes de pression suivant la revendication 1, caractérisé en ce qu'il est prévu pour chaque cycle un canal qui se termine en un injecteur (27), qui débouche dans le corps de rotor (7), dans la paroi du corps à gaz (6), entre le canal des gaz d'échappement basse pression (4) et le canal des gaz d'échappement haute pression (3), et qui est en communication par une canalisation d'injection (26) avec une région du canal d'air haute pression (2) située en amont du volet d'air de suralimentation (14).

4. Turbochargeur à ondes de pression suivant la revendication 1, caractérisé en ce qu'il est prévu pour chaque cycle un canal (32) qui se termine par un injecteur (31), lequel débouche dans le corps de rotor (7) immédiatement avant l'arête d'ouverture d'une poche de compression (33) du corps à air (5) et est en communication par le canal (32) avec la poche de compression (33).

5. Turbochargeur à ondes de pression suivant la revendication 1, caractérisé en ce qu'il est prévu pour chaque cycle un injecteur (49) qui débouche dans le corps de rotor (7) avant l'arête d'ouverture de la poche de compression (11) et qui est en communication par une canalisation d'injection (43; 45) avec une région du canal d'air haute pression (2) située en amont d'un volet d'air de suralimentation (14+40; 44).

6. Turbochargeur à ondes de pression suivant l'une ou l'autre des revendications 2 à 5, caractérisé en ce que le canal d'air haute pression (2) prend la forme d'un injecteur dans la région de son embouchure dans le corps de rotor (7), la partie de paroi du canal (3) vers l'arête d'ouverture étant inclinée d'un angle β compris entre 75° et 80° et la partie de paroi vers l'arête de fermeture étant inclinée d'un angle α compris entre 0° et 10°, les deux angles étant mesurés par rapport à une normale aux faces d'extrémité du rotor (8).

7. Turbochargeur à ondes de pression suivant l'une ou l'autre des revendications 2 à 5, caractérisé en ce que le canal des gaz d'échappement haute pression (3) s'élargit, dans la région de son embouchure dans le corps de rotor (7), en un canal d'arrivée (50) avec poche de gaz en coin qui s'étend vers l'amont, dont la partie de paroi vers l'arête de fermeture est inclinée d'un angle valant de préférence environ 75°, mesuré par rapport à une normale aux faces d'extrémité du rotor (8), et en ce que l'arête de fermeture (51) du canal d'arrivée (50) avec poche de gaz en coin, vue dans le sens de rotation du rotor, se trouve après l'arête d'ouverture (53) d'une poche d'expansion (52) dans le corps à air (5).

8. Turbochargeur à ondes de pression suivant la revendication 1, caractérisé en ce que la poche d'expansion (34, respectivement 52) présente soit des parties de paroi obliques (37, respectivement 35) aussi bien à l'arête d'ouverture (38) qu'à l'arête de fermeture (36) soit seulement une seule partie de paroi oblique voisine de l'arête de fermeture, l'angle de la partie de paroi oblique voisine de l'arête de fermeture valant, dans les deux cas, de préférence environ 50°, mesuré par rapport à une normale à la face d'extrémité du rotor (8).

9. Turbochargeur à ondes de pression suivant l'une ou l'autre des revendications 2, 3 et 5, caractérisé en ce que le dispositif de commande (15) en soi connu présente, comme éléments principaux, une chambre à diaphragme (17) avec une membrane (18), une canalisation de pression de commande (19) qui est en communication avec la poche de compression (11) et un dispositif de vannes (23; 28; 41) pour la canalisation d'injection (21; 26; 43), la membrane (18) étant soumise d'une part à la pression régnant dans la canalisation de pression de commande (19) et d'autre part à la pression régnant dans le canal d'air haute pression (2), en ce que le volet d'air de suralimentation (14; 14+40) se trouve en liaison active avec la membrane (18) et avec le dispositif de vannes (23; 28; 41), de telle sorte que, le volet d'air de suralimentation (14; 14+40) étant fermé, le dispositif de vannes (23; 28; 41) libère le passage à travers la canalisation d'injection (21; 26; 43) et que, le volet d'air de suralimentation (14; 14+40) étant ouvert, le passage à travers la canalisation d'injection (21; 26; 43) soit fermé.

10. Turbochargeur à ondes de pression suivant la revendication 9, caractérisé en ce que, pour assurer la liaison active entre le volet d'air de suralimentation (14) et le dispositif de soupape (41), il est prévu, sur le volet d'air de suralimentation (14), un nez (40) en forme de crochet dont la pointe a une forme qui assure la liaison avec une plaque (42), laquelle plaque (42) constitue l'organe de fermeture du dispositif de soupape (41).

11. Turbochargeur à ondes de pression suivant la revendication 9, caractérisé en ce que le dispositif de vannes est une soupape à diaphragme (28) située dans la canalisation d'injection (21), dont la membrane (29) constitue l'organe de fermeture, lequel est soumis d'une part à la pression régnant avant le volet d'air de suralimentation (14) fermé, via la canalisation d'injection (21), et d'autre part à la pression régnant après le volet d'air de suralimentation (14) fermé, via une canalisation de pression de commande (30) qui est en communication avec la canalisation d'air de suralimentation (16) en aval du volet d'air de suralimentation (14).

12. Turbochargeur à ondes de pression suivant la revendication 5, caractérisé en ce que le volet d'air de suralimentation (14) est situé immédiatement après le branchement de la canalisation d'injection (45) dans le canal d'air haute pression (2), de telle sorte qu'il ferme complètement la section d'entrée dudit branchement lorsque la section de passage du canal d'air haute pression (2) est complètement libérée, et en ce que, pour la commande du volet d'air de suralimentation, il est prévu une boîte à membrane (17) et une canalisation de pression de commande (19) qui communique avec la poche de compression (11).

13. Turbochargeur à ondes de pression suivant la revendication 1, avec un rotor (8) à flux unique, caractérisé en ce que, dans le canal des gaz d'échappement haute pression (3) de l'un (57) des deux cycles (57, 59), il est prévu un volet de fermeture (58) qui est maintenu fermé, pendant la phase de démarrage du turbochargeur à ondes de pression, par une différence de pression caractéristique du processus des ondes de pression.

14. Turbochargeur à ondes de pression suivant la revendication 1, avec un rotor à double flux, caractérisé en ce que, dans le canal des gaz d'échappement haute pression, il est prévu dans le canal d'entrée (65) vers le flux intérieur, un volet de fermeture qui est maintenu fermé, pendant la phase de démarrage du turbochargeur à ondes de pression, par une différence de pression caractéristique du processus des ondes de pression.

15. Turbochargeur à ondes de pression suivant la revendication 1, avec un rotor à double flux, caractérisé en ce que, dans le canal des gaz d'échappement haute pression, il est prévu un volet de fermeture (68) qui, pendant la phase de démarrage du turbochargeur à ondes de pression et sous la commande d'une différence de pression caractéristique du processus des ondes de pression, maintient fermé le canal d'entrée (65) vers le flux intérieur et le canal d'entrée (66) vers le cycle inférieur du flux extérieur.

16. Turbochargeur à ondes de pression suivant la revendication 1, caractérisé en ce que, dans la région de l'embouchure du canal d'air basse pression (1), il est prévu au moins une nervure de guidage (54), parmi lesquelles la nervure de guidage (54) voisine de l'arête d'ouverture du canal (1) est disposée de telle façon qu'elle empêche un décollement de l'écoulement dans la région de l'arête d'ouverture.

FIG.1

FIG.2

FIG.3

FIG.9

FIG.4

FIG.5

FIG.10

FIG.11

Fig.6

Fig. 8

Fig.7

Fig.12